# EUROPÄISCHE PATENTANMELDUNG

(11) **EP 3 036 982 A1**
(43) Veröffentlichungstag der Anmeldung: **29.06.2016**
(21) Anmeldenummer: 15192259.8
(22) Anmeldetag: 30.10.2015
(51) Int. Cl.: A01B 29/04, A01B 29/06

(54) **PACKERWALZE**

(30) Priorität: 15.12.2014 DE 202014106031 U
(71) Anmelder: Treffler Maschinenbau GmbH & Co. KG, 86554 Pöttmes-Echsheim (DE)
(72) Erfinder: Niedermaier, Josef, 86316 Ottmaring (DE)
(74) Vertreter: Charrier, Rapp & Liebau

(57) **Zusammenfassung**

Die Erfindung betrifft eine Packerwalze (3) mit einem Walzenkörper (17), der um seine Längsachse (18) drehbar an einem Träger (19, 20) gelagert ist. Um eine verbesserte Reinigungswirkung zu ermöglichen. enthält der Walzenkörper (17) mehrere über den Umfang verteilte und parallel zur Längsachse (18) verlaufende Leisten (24), die durch Federelemente (26) radial nach außen gedrückt sind.

## Beschreibung

Die Erfindung betrifft eine Packerwalze für ein Bodenbearbeitungsgerät nach dem Oberbegriff des Anspruchs 1. Die Erfindung betrifft außerdem ein Bodenbearbeitungsgerät mit einer derartigen Packerwalze.

Eine derartige Packerwalze wird z.B. an einem Grubber oder einem anderen Bodenbearbeitungsgerät zur Rückverfestigung des zuvor aufgerissenen oder anderweitig bearbeiteten Bodens eingesetzt. Aus der DE 299 07 668 U1 ist eine Packerwalze bekannt, die aus mehreren parallel nebeneinander angeordneten Laufringen besteht. Bei derartigen offenen Packerwalzen ergibt sich oftmals das Problem, dass diese besonders bei klebrigen und nassen Böden durch das zuvor aufgebrochene Erdreich verstopfen, wodurch ihre Funktionsweise beeinträchtigt wird. Daher werden an den Laufringen oftmals gesonderte Abstreifeinrichtungen angebracht, die jedoch nur eine beschränkte Reinigungswirkung aufweisen.

Aufgabe der Erfindung ist es, eine Packerwalze und ein Bodenbearbeitungsgerät mit einer solchen Packerwalze zu schaffen, die eine verbesserte Reinigungswirkung aufweisen.

Diese Aufgabe wird durch eine Packerwalze mit den Merkmalen des Anspruchs 1 und durch ein Bodenbearbeitungsgerät mit den Merkmalen des Anspruchs 10 gelöst. Zweckmäßige Ausgestaltungen und vorteilhafte Weiterbildungen der Erfindung sind in den Unteransprüchen angegeben.

Bei der erfindungsgemäßen Packerwalze weist der um seine Längsachse drehbar an einem Träger gelagerte Walzenkörper mehrere über den Umfang verteilte und parallel zur Längsachse verlaufende Leisten auf, die durch Federelemente radial nach außen gedrückt sind. Beim Abrollen des Walzenkörpers am Boden werden die federnd gelagerten Leisten beim Auftreffen auf den Boden entgegen der Federkraft eingedrückt und springen wieder zurück, wenn die Leisten beim Weiterdrehen des Walzenkörpers wieder außer Kontakt mit dem Boden gelangen. Beim Zurückfedern der Leisten wird das an den Leisten anhaftende Erdreich entfernt, wodurch sich ein besonders guter Selbstreinigungseffekt ergibt. Dadurch kann auch bei klebrigen und nassen Böden ein verstopfungsfreier Betrieb der Packerwalze gewährleistet werden.

In einer besonders zweckmäßigen Ausführung weist der Walzenkörper mehrere in Richtung der Längsachse voneinander beabstandete Scheiben auf, an denen die Federelemente angeordnet sind. Die einzelnen Scheiben können durch parallel zur Längsachse des Walzenkörpers verlaufende und über den Umfang der Scheiben gleichmäßig verteilte Längsprofile miteinander verbunden sein. Die Längsprofile können z.B. als Rechteckprofilrohre ausgebildet sein, die derart an den Scheiben befestigt sind, dass eine Kante radial nach außen weist.

Die Federelemente können auch seitlich beweglich am Walzenkörpers angeordnet sein. Dadurch können die Leisten auch seitlich ausweichen.

Die Federelemente sind zweckmäßigerweise zwischen einem mit den Leisten verbundenen Halter und einer an den Scheiben befestigten inneren Führung angeordnet. Die äußeren Halter für die Leisten können über Bolzen radial verschiebbar in den inneren Führungen geführt sein.

In einer festigungstechnisch einfachen und kostengünstigen Ausführung können die gefederten Leisten gerade ausgeführt sein. Sie können aber auch gewellt, gezahnt oder mit einer anderen Außenkontur versehen sein.

Die Erfindung betrifft außerdem ein Bodenbearbeitungsgerät mit einem Grubber und einer dem Grubber in Zugrichtung nachgeordneten Packerwalze, die wie vorstehend beschrieben aufgebaut ist. Zwischen dem Grubber und der Packerwalze kann eine Zustreicheinrichtung angeordnet sein.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: ein Bodenbearbeitungsgerät mit einem Grubber, einer Zustreicheinrichtung und einer Packerwalze in einer Draufsicht;
- **Figur 2**: das Bodenbearbeitungsgerät von Figur 1 in einer Seitenansicht;
- **Figur 3**: eine Packerwalze in einer Perspektive und
- **Figur 4**: die Packerwalze von Figur 3 in einer Seitenansicht.

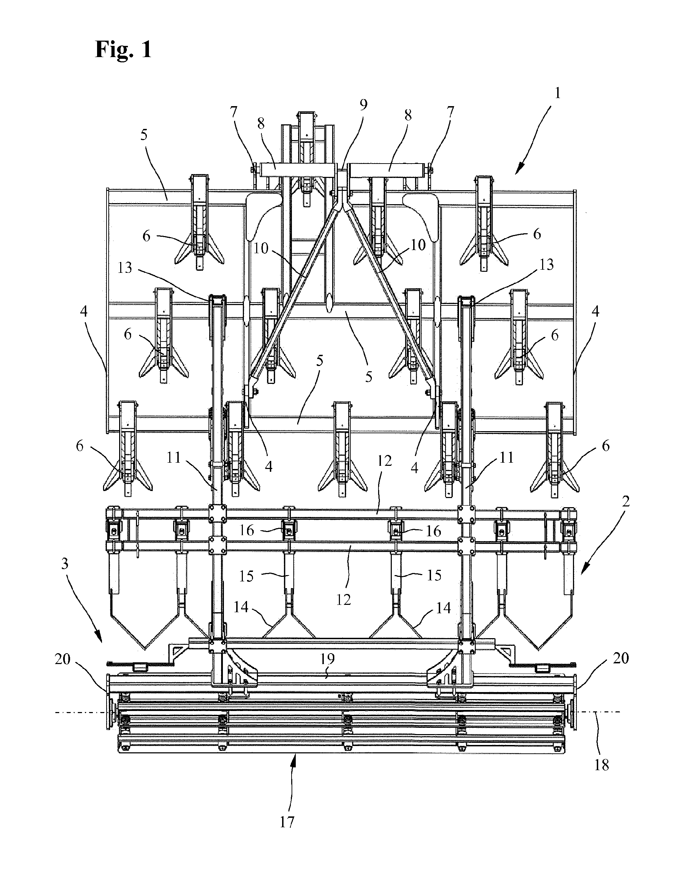

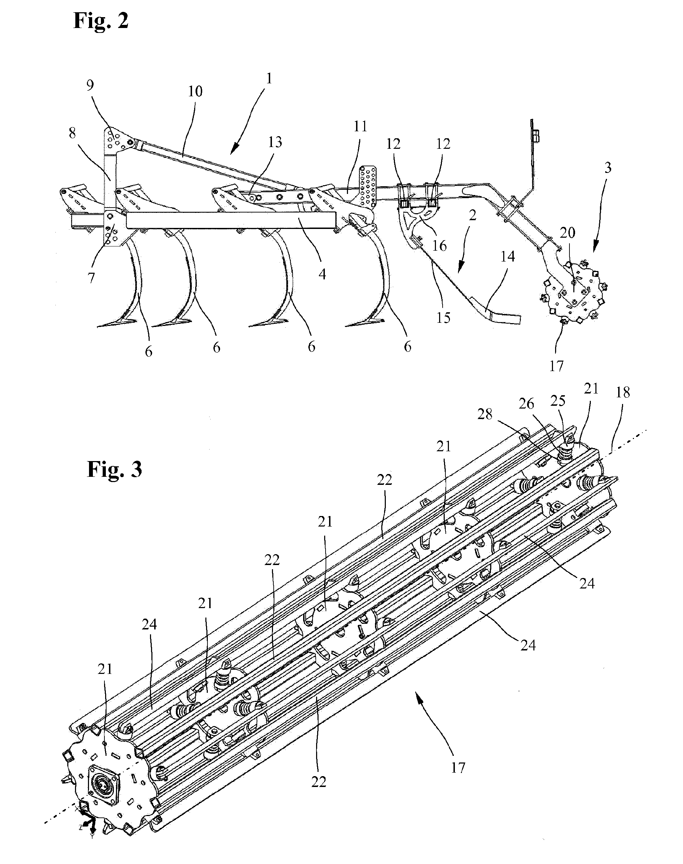

In den Figuren 1 und 2 ist ein Bodenbearbeitungsgerät mit einem Grubber 1, einer dem Grubber 1 in Zugrichtung nachgeordneten Zustreicheinrichtung 2 und einer der Zustreicheinrichtung in Zugrichtung nachgeordneten Packerwalze 3 für die Rückverfestigung des Bodens nach einer Bodenbearbeitung in einer Draufsicht und Seitenansicht gezeigt. Der Grubber 1 weist in an sich bekannter Weise einen aus Längsprofilen 4 und Querprofilen 5 gebildeten Grubbertragrahmen mit mehreren an den Querprofilen 5 nebeneinander angeordneten Grubberzinken 6 auf. Bei der gezeigten Ausführung enthält der Grubbertragrahmen drei zueinander parallele Querprofile 5, an denen jeweils mehrere nebeneinander angeordnete Grubberzinken 6 befestigt sind.

Wie besonders aus den Figuren 1 und 2 hervorgeht, ist an dem in Zugrichtung gesehen vorderen Ende des Grubbertragrahmens eine Aufhängung mit zwei unteren Aufhängungsteilen 7 zum Ankoppeln zweier Unterlenker und einem durch zwei schräge Stützen 8 an den unteren Aufhängungsteilen 7 abgestützten oberen Aufhängungsteil 9 zum Ankoppeln eines Oberlenkers einer Dreipunktaufhängung an einem Zugfahrzeug vorgesehen. Das obere Aufhängungsteil 9 ist neben den beiden Stützen 8 auch durch zwei schräg nach unten und zur Seite verlaufende Streben 10 an zwei inneren Längsprofilen 4 des Grubbertragrahmens abgestützt.

Die Zustreicheinrichtung 2 und die Packerwalze 3 sind an einem aus Längsträgern 11 und Querträgern 12 gebildeten Traggestell schwenkbar am Grubbertragrahmen angelenkt. Aus Figur 2 ist ersichtlich, dass bei der gezeigten Ausführung zwei zueinander parallele Längsträger 11 mit ihrem einen Ende über Gelenke 13 am mittleren Querprofil 5 des Grubbertragrahmens angelenkt. An den nach unten abgewinkelten freien Enden der beiden Längsträger 11 ist die Packerwalze 3 befestigt.

In Figur 1 ist erkennbar, dass die in Zugrichtung hinter dem Grubber 1 angeordnete Zustreicheinrichtung 2 mehrere nebeneinander angeordnete, abgewinkelte Zustreichelemente 14 umfasst, die über Blattfedern 15 und Halterungen 16 an den Querträgern 12 befestigt sind. Die in Zugrichtung hinter der Zustreicheinrichtung 2 angeordnete Packerwalze 3 enthält einen Walzenköper 17, der um seine Längsachse 18 drehbar an einem aus einer Quertraverse 19 und zwei Lagerplatten 20 gebildeten Träger gelagert ist. Die Quertraverse 19 ist an den nach unten abgewinkelten hinteren Enden der beiden Längsträger 11 befestigt. Der Walzenkörper 17 ist zwischen den beiden an den Enden des Querträgers 19 befestigten Lagerplatten 20 gelagert.

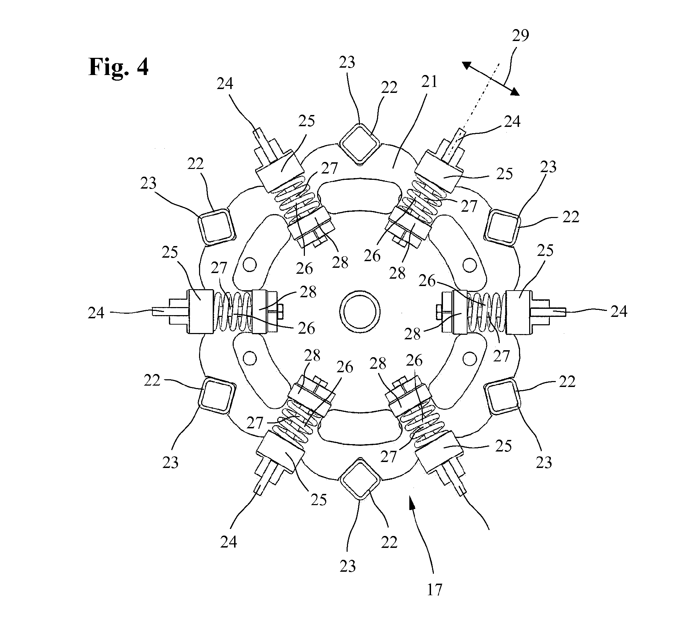

Der in Figur 3 gesondert dargestellte Walzenkörper 17 der Packerwalze 3 enthält mehrere in Richtung der Längsachse 18 voneinander beabstandete, parallele Scheiben 21, die durch parallel zur Längsachse 18 des Walzenkörpers 17 verlaufende und über den Umfang der Scheiben 21 gleichmäßig verteilte Längsprofile 22 miteinander verbunden sind. Wie aus Figur 4 hervorgeht, sind die Längsprofile 22 bei der gezeigten Ausführung als Rechteckprofilrohre ausgeführt und derart angeordnet, dass eine Kante 23 radial nach außen weist. Die Längsprofile 22 können mit den Scheiben 21 verschweißt oder auf andere geeignete Weise fest mit diesen verbunden sein.

Zwischen den Längsprofilen 22 sind dazu parallele und ebenfalls parallel zur Längsachse 18 des Walzenkörpers 17 verlaufende Leisten 24 angeordnet. Die radial nach außen vorstehenden Leisten 24 sind in Haltern 25 angeordnet und werden durch Federelemente 26 radial nach außen gedrückt. Die Halter 25 für die Leisten 24 sind über Bolzen 27 radial verschiebbar in inneren Führungen 28 geführt. Die hier als Spiraldruckfedern ausgebildeten Federelemente 26 sind zwischen den inneren Führungen 28 und den Haltern 25 eingespannt. Die Federelemente 26 können aber auch als Flachfedern, Federteller und dgl. ausgebildet sein. Die zwischen den Längsprofilen 22 angeordneten Leisten 24 werden beim Auftreffen auf den Boden eingerückt und federn beim Austreten aus dem Boden wieder zurück. Dadurch kann angesammeltes Erdreich entfernt werden, wodurch sich ein besonders guter Selbstreinigungseffekt ergibt. Die Federelemente 26 sind aber auch seitlich beweglich, so dass die Leisten 24 gemäß Figur 4 in Richtung des Pfeils zum z.B. um jeweils 20mm zur Seite ausweichen können.

## Patentansprüche

1. Packerwalze (3) mit einem Walzenkörper (17), der um seine Längsachse (18) drehbar an einem Träger (19, 20) gelagert ist, **dadurch gekennzeichnet, dass** der Walzenkörper (17) mehrere über den Umfang verteilte und parallel zur Längsachse (18) verlaufende Leisten (24) enthält, die durch Federelemente (26) radial nach außen gedrückt sind.

2. Packerwalze nach Anspruch 1, **dadurch gekennzeichnet, dass** der Walzenkörper (17) mehrere in Richtung der Längsachse (18) voneinander beabstandete Scheiben (21) enthält, an denen die Federelemente (26) angeordnet sind.

3. Packerwalze nach Anspruch 1 oder 2, **dadurch gekennzeichnet, dass** die Federelemente (26) seitlich beweglich an dem Walzenkörper (17) angeordnet sind.

4. Packerwalze nach Anspruch 2 oder 3, **dadurch gekennzeichnet, dass** die Scheiben (21) durch parallel zur Längsachse (18) des Walzenkörpers (17) verlaufende und über den Umfang der Scheiben (21) gleichmäßig verteilte Längsprofile (22) miteinander verbunden sind.

5. Packerwalze nach Anspruch 3, **dadurch gekennzeichnet, dass** die Längsprofile (22) als Rechteckprofilrohre ausgebildet sind.

6. Packerwalze nach Anspruch 4 oder 5, **dadurch gekennzeichnet, dass** die Längsprofile (22) derart an den Scheiben (21) befestigt sind, dass eine Kante (23) radial nach außen weist.

7. Packerwalze nach einem der Ansprüche 2 bis 6, **dadurch gekennzeichnet, dass** die Federelemente (26) zwischen einem mit den Leisten (24) verbundenen Halter (25) und einer an den Scheiben (21) befestigten inneren Führung (28) angeordnet sind.

8. Packerwalze nach Anspruch 7, **dadurch gekennzeichnet, dass** die Halter (25) für die Leisten (24) über Bolzen (27) radial verschiebbar in den inneren Führungen (28) geführt sind.

9. Packerwalze nach einem der Ansprüche 1 bis 8, **dadurch gekennzeichnet, dass** die Leisten (24) gerade, gewellt oder gezahnt sind.

10. Packerwalze nach einem der Ansprüchel bis 9, **dadurch gekennzeichnet, dass** der Träger (19, 20) eine Quertraverse (19) und seitliche Lagerplatten (20) enthält, zwischen denen der Walzenkörper (17) drehbar gelagert ist.

11. Bodenbearbeitungsgerät mit einem Grubber (1) und einer dem Grubber (1) in Zugrichtung nachgeordneten Packerwalze (3), **dadurch gekennzeichnet, dass** die Packerwalze (3) nach einem der Ansprüche 1 bis 10 ausgebildet ist.

12. Bodenbearbeitungsgerät nach Anspruch 11, **dadurch gekennzeichnet, dass** zwischen dem Grubber (1) und der Packerwalze (3) eine Zustreicheinrichtung (2) angeordnet ist.
